# FASCICULE DE BREVET EUROPEEN

(11) **EP 0 593 323 B1**
(45) Date de publication et mention de la délivrance du brevet: **17.04.1996**
(21) Numéro de dépôt: 93402322.7
(22) Date de dépôt: 22.09.1993
(51) Int. Cl.: F16B 41/00, B25B 23/00

(54) **Dispositif de maintien d'une pluralité de vis, écrous ou analogues sur une pièce quelconque**
Vorrichtung zur Positions-Beibehaltung einer Mehrzahl von Schrauben, Muttern und dergleichen auf irgendeinem Werkstück
Device for holding in position a plurality of screws, nuts or the like upon some piece or other

(30) Priorité: 15.10.1992 FR 9212355
(43) Date de publication de la demande: 20.04.1994
(73) Titulaire: RAPID S.A., F-75017 Paris (FR)
(72) Inventeur: Leon, Jean-Pierre, F-78000 Houilles (FR)
(74) Mandataire: Durand, Yves Armand Louis

(56) Documents cités:
- FR-A- 2 574 877
- GB-A- 230 271
- US-A- 4 984 503

## Description

La présente invention a essentiellement pour objet un dispositif de maintien d'une pluralité de vis ou d'écrous munis d'une collerette ou embase, sur un élément quelconque destiné à être fixé à un autre élément, ces deux éléments pouvant être deux panneaux ou deux pièces quelconques (FR-A-2 574 877).

Il est souvent nécessaire, dans l'industrie mécanique, d'utiliser plusieurs boulons pour fixer deux éléments. Dans ce cas, les vis ou les écrous doivent être maintenus et serrés les uns après les autres, ce que l'on réalise généralement à l'aide d'une clé en passant d'une vis à l'autre ou d'un boulon à l'autre.

Mais comme on le comprend, il s'agit là d'une opération longue et coûteuse sur le plan de la main d'oeuvre, surtout lorsqu'il convient d'effectuer le serrage d'une multiplicité de boulons.

Aussi, la présente invention a pour but de remédier à ces inconvénients en proposant un outil perdu unique facilitant les opérations de vissage et les rendant plus rapides, par le fait que la pluralité de vis ou d'écrous est simultanément maintenue avec une certaine pression sur l'une des pièces à fixer, ce qui permet de résister efficacement aux forces de poussée pour effectuer le vissage, et toutes les vis ou bien tous les boulons sont avantageusement aussi immobilisés en rotation.

A cet effet, l'invention a pour objet un dispositif de maintien d'une pluralité de vis, écrous, ou analogues munis d'une collerette sur un élément quelconque destiné à être fixé à un autre élément, caractérisé en ce qu'il comprend une plaque comportant des ouvertures susceptibles de recevoir chacune une tête de vis ou un écrou, ainsi que des moyens de clippage de ladite plaque sur ledit élément de façon à appliquer chaque vis ou écrou par sa collerette associée sur ledit élément.

Suivant une autre caractéristique de ce dispositifs les ouvertures de la plaque présentent une forme complémentaire de celle de la tête de vis ou de l'écrou pour les immobiliser en rotation.

Selon encore une autre caractéristique de l'invention, au moins une partie de la plaque est déformable sous l'effet d'une pression et porte des moyens de clippage coopérant avec un orifice ménagé dans l'élément précité.

Suivant un mode de réalisation préféré, les moyens de clippage se composent de deux crochets découpés dans la plaque et repliés orthogonalement au plan de celle-ci.

On précisera encore ici que les deux crochets, situés respectivement dans deux plans parallèles et très proches possèdent au repos et à eux deux une largeur hors tout légèrement supérieure aux dimensions de l'orifice dans l'élément.

Les deux crochets précités forment de préférence les extrémités de deux languettes en vis-à-vis découpées dans la plaque, ce qui améliore leur flexibilité relative lors de leur insertion par pression dans l'orifice de l'élément.

La plaque peut présenter la forme d'un polygone dont les sommets comportent les ouvertures précitées et dont la partie centrale, élastiquement déformable sous l'effet d'une pression, comporte les moyens de clippage ou crochets précités.

Mais les caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'une plaque selon l'invention, avant montage sur un élément à fixer, tel qu'un panneau, cet élément étant représenté partiellement et en perspective.

La figure 2 est une vue en perspective de la plaque en position montée ou clippée sur l'élément à fixer.

Les figures 3 à 5 illustrent schématiquement le fonctionnement des crochets de la plaque lors du montage de celle-ci sur l'élément à fixer, ces figures étant des vues en coupe suivant la ligne III-III de la figure 2.

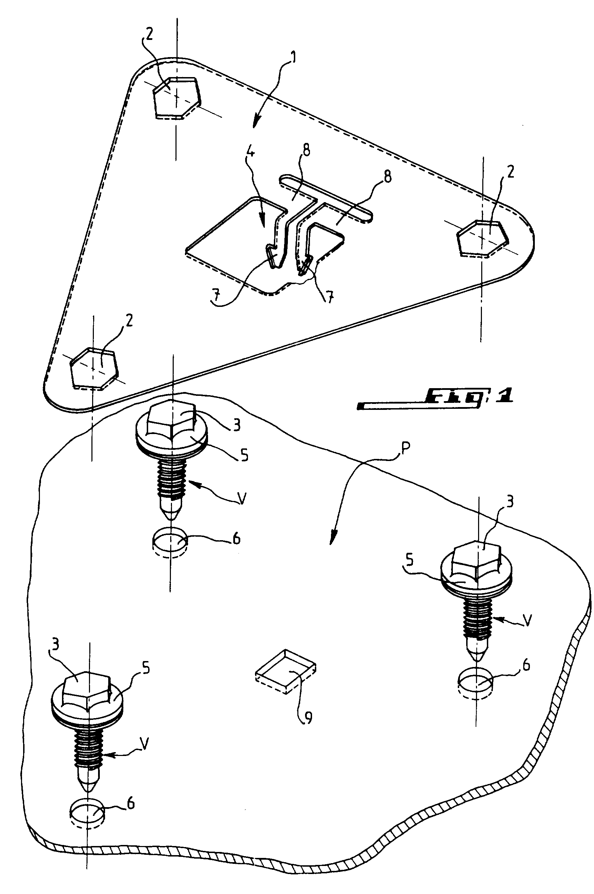

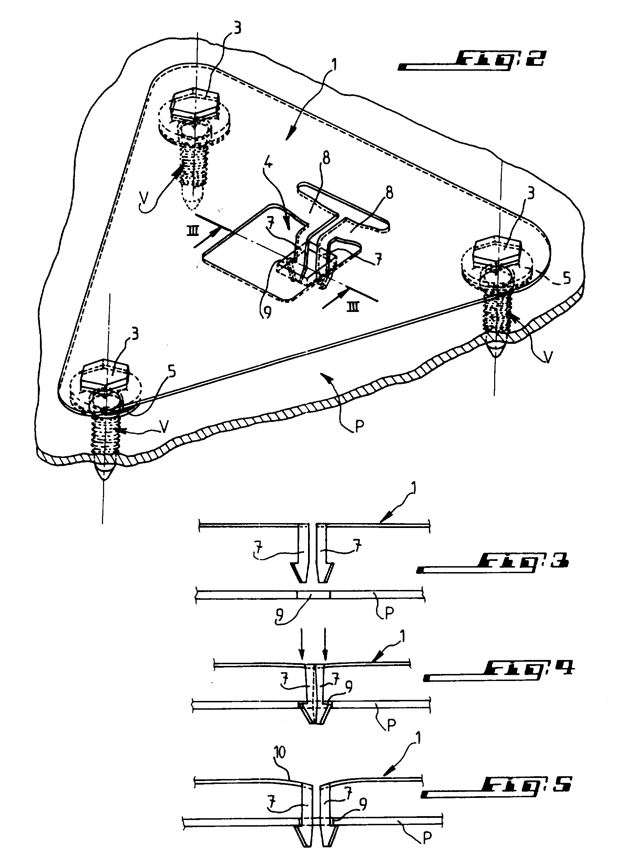

En se reportant plus particulièrement aux figures 1 et 2, on voit qu'un dispositif conforme à cette invention comprend essentiellement une plaque 1 munie d'ouvertures 2 susceptibles de recevoir chacune une tête 3 de vis V, ou bien un écrou (non représenté).

La plaque 1 est munie de moyens 4, qui seront décrits en détail ultérieurement, et qui permettent son montage par clippage sur un élément, tel qu'un panneau ou une pièce P.

Ainsi, la plaque 1 pourra fermement maintenir ou appliquer les vis V par leur collerette ou embase associée 5 contre le panneau ou la pièce P, étant entendu que lesdites vis passent au travers d'orifices 6 ménagés dans ledit panneau ou ladite pièce.

Suivant l'exemple représenté, la plaque 1 présente la forme d'un triangle dont les trois sommets possèdent chacun une ouverture 2, et dont la partie centrale comporte les moyens de clippage 4. Mais toute forme polygonale autre que triangulaire pourrait être envisagée sans sortir du cadre de l'invention, cela étant par exemple fonction du nombre de vis V utilisé pour la fixation de l'élément P à un autre élément (non représenté).

Les ouvertures 2, comme on le voit bien sur les figures, présentent une forme hexagonale correspondant à la forme hexagonale de la tête 3 des vis V, de sorte qu'après montage de la plaque 1 sur l'élément P, la tête 3 des vis V est reçue dans les ouvertures 2 et lesdites vis sont immobilisées en rotation.

La plaque 1, tout en demeurant relativement rigide, est néanmoins déformable sous l'effet d'une pression exercée à la main sensiblement en son centre, au niveau des moyens 4 de clippage de ladite plaque sur l'élément P.

Ces moyens 4 se composent essentiellement de deux pattes en forme de crochets 7 qui sont découpés dans la plaque 1 et qui sont repliés orthogonalement au plan de ladite plaque, comme on le voit bien sur les figures 1 et 2.

Les deux pattes ou crochets 7 forment, suivant l'exemple de réalisation représenté, les extrémités de deux languettes 8 en vis-à-vis et découpées dans la plaque 1.

Plus précisément, les deux pattes ou crochets 7, après repliement vers le dessous de la plaque 1 sont situés respectivement dans deux plans sensiblement parallèles et qui sont très proches l'un de l'autre, de sorte que lesdits crochets peuvent fonctionner à la manière d'une paire de ciseaux, comme on le décrira plus loin à propos du fonctionnement.

Au repos, et comme on le voit bien sur les figures 1 et 3 notamment les crochets 7 possèdent à eux deux une largeur hors tout qui est légèrement supérieure aux dimensions d'un orifice 9 ménagé dans l'élément P et dans lequel peuvent s'accrocher par clippage les crochets 7.

Mais, pour une meilleure compréhension de l'invention, on expliquera ci-après comment s'effectue le montage de la plaque 1 sur l'élément P et quels sont les avantages procurés par cette plaque eu égard à la fixation de l'élément P sur un autre élément (non représenté), et cela en se reportant plus particulièrement aux figures 2 à 5.

Les vis V sont tout d'abord introduites dans les orifices 6 de l'élément P, la collerette 5 les retenant sur ledit élément, comme on le comprend.

Ensuite, la plaque 1 est positionnée sur les vis, de manière que les ouvertures 2 soient traversées par les têtes 3 desdites vis, étant entendu qu'ainsi la plaque 1 prend appui par trois points sur les collerettes 5, puisque, dans l'exemple représenté, il s'agit de réaliser une fixation à l'aide de trois vis seulement.

Ensuite, une pression est exercée à la main au centre de la plaque 1 et au niveau des languettes 8, de sorte que, la plaque 1 prenant appui par ses trois sommets sur les collerettes 5, va se déformer en son centre pour provoquer l'introduction des crochets 7 dans l'orifice 9 de l'élément ou panneau P.

Plus précisément, et comme on le voit bien sur la figure 4, les crochets 7 qui, à eux deux présentent initialement une largeur plus grande que celle de l'orifice 9 (figure 3), vont pénétrer dans l'orifice 9 de l'élément P en se déformant à la manière des lames d'une paire de ciseaux qui se ferme, et cela jusqu'à ce que lesdits crochets franchissent l'orifice 9, comme on le voit bien sur la figure 5. Dans cette position, les crochets 7 se sont élastiquement écartés l'un de l'autre pour venir s'accrocher sur le dessous de l'élément P. La plaque 1 comporte alors une déformation visible en 10 sur la figure 5 et procurant une mise sous contrainte de ladite plaque qui ainsi exerce une pression par ses trois sommets sur les collerettes 5 des vis V.

On comprend donc que non seulement les vis seront immobilisées en rotation grâce aux ouvertures 2 en prise avec les têtes 3 de ces vis, mais lesdites vis pourront efficacement résister aux efforts de poussée lors du vissage et du serrage des écrous (non représentés), en vue de réaliser l'assemblage de l'élément P avec un autre élément qui n'est pas représenté.

Ainsi, la plaque 1 constituera en quelque sorte une pièce perdue, en ce sens qu'elle restera solidaire des éléments assemblés, comme on le voit bien sur la figure 2, et cette plaque procurera, comme expliqué précédemment, des avantages considérables pour ce qui est de la facilité et de la rapidité de réalisation d'un assemblage nécessitant une multiplicité de boulons, sans parler du fait qu'une telle plaque permettra avantageusement des assemblages à l'aide d'outils automatiques et robotisés.

Bien entendu, l'invention n'est nullement limitée au mode de réalisation décrit et illustré qui n'a été donné qu'à titre d'exemple.

C'est ainsi que la plaque pourra revêtir la forme d'un polygone quelconque avec des ouvertures prévues aux sommets du polygone ou en dehors de ces sommets. Cette plaque peut permettre aussi bien le maintien d'écrous à embase que de têtes de vis.

## Revendications

1. Dispositif de maintien d'une pluralité de vis, écrous ou analogues munis d'une collerette (5) sur un élément quelconque (P) destiné à être fixé à un autre élément, caractérisé en ce qu'il comprend une plaque (1) comportant des ouvertures (2) susceptibles de recevoir chacune une tête (3) de vis (V) ou un écrou, ainsi que des moyens (4) de clippage de ladite plaque (1) sur ledit élément (P) de façon à appliquer chaque vis ou écrou par sa collerette associée (5) sur ledit élément.

2. Dispositif selon la revendication 1, caractérisé en ce que les ouvertures précitées (2) présentent une forme complémentaire de celle de la tête (3) de vis (V) ou de l'écrou pour les immobiliser en rotation.

3. Dispositif selon la revendication 1 ou 2, caractérisé en ce qu'au moins une partie de la plaque (1) est déformable sous l'effet d'une pression et porte des moyens (4) de clippage coopérant avec un orifice (9) ménagé dans l'élément précité (P).

4. Dispositif selon la revendication 1 ou 3, caractérisé en ce que les moyens de clippage précités (4) se composent de deux crochets (7) découpés dans la plaque et repliés orthogonalement au plan de celle-ci.

5. Dispositif selon la revendication 4, caractérisé en ce que les deux crochets (7), situés respectivement dans deux plans parallèles et très proches, possèdent au repos et à eux deux une largeur hors tout légèrement supérieure aux dimensions de l'orifice (9) dans l'élément (P).

6. Dispositif selon la revendication 4 ou 5, caractérisé en ce que les deux crochets précités (7) forment les extrémités de deux languettes en vis-à-vis (8) découpées dans la plaque (1).

7. Dispositif selon l'une des revendications 1 à 6, caractérisé en ce que la plaque (1) présente la forme d'un polygone dont les sommets comportent les ouvertures précitées (2) et dont la partie centrale, élastiquement déformable sous l'effet d'une pression, comporte les moyens de clippage précités (4).

## Patentansprüche

1. Vorrichtung zum Halten einer Vielzahl von mit einem Flansch (5) versehenen Schrauben, Muttern oder dergleichen an irgendeinem zur Befestigung an einem anderen Element bestimmten Element (P), dadurch gekennzeichnet, dass sie eine Platte (1) mit jeweils zur Aufnahme eines Kopfes (3) einer Schraube (V) oder einer Mutter geeigneten Öffnungen (2), sowie Mittel (4) zum Aufklemmen der besagten Platte (1) an dem besagten Element (P) umfasst, um jede Schraube bzw. Mutter mit ihrem zugeordneten Flansch (5) an das besagte Element anzulegen.

2. Vorrichtung nach Anspruch 1, dadurch gekennzeichnet, dass die vorgenannten Öffnungen (2) eine derjenigen des Kopfes (3) der Schraube (V) bzw. der Mutter entsprechende komplementäre Gestalt aufweisen, um sie gegen Drehung festzuhalten.

3. Vorrichtung nach Anspruch 1 oder 2, dadurch gekennzeichnet, dass wenigstens ein Teil der Platte (1) unter der Wirkung eines Druckes verformbar ist und mit einem in dem vorgenannten Element (P) gebildeten Loch (9) zusammenwirkende Klemmmittel (4) trägt.

4. Vorrichtung nach Anspruch 1 oder 3, dadurch gekennzeichnet, dass die vorgenannten Klemmmittel (4) sich aus zwei in der Platte ausgeschnittenen und orthogonal zur Ebene derselben umgebogenen Haken (7) zusammensetzen.

5. Vorrichtung nach Anspruch 4, dadurch gekennzeichnet, dass die jeweils in zwei parallelen und sehr nahe zueinander gelegenen Ebenen gelegenen Haken (7) im Ruhezustand und beide zusammen eine über alles gemessene Breite, die etwas grösser als die Abmessungen des Loches (9) in dem Element (P) ist, besitzen.

6. Vorrichtung nach Anspruch 4 oder 5, dadurch gekennzeichnet, dass die beiden vorgenannten Haken (7) die Enden von zwei in der Platte (1) ausgeschnittenen und einander gegenüberliegenden Stegen (8) bilden.

7. Vorrichtung nach einem der Ansprüche 1 bis 6, dadurch gekennzeichnet, dass die Platte (1) die Gestalt eines Vielecks aufweist, dessen Spitzen die vorgenannten Öffnungen (2) aufweisen und dessen unter der Wirkung eines Druckes elastisch verformbarer Mittelteil die vorgenannten Klemmmittel (4) aufweist.

## Claims

1. Device for holding a plurality of screws, nuts or the like provided with a flange (5) onto any element (P) whatsoever adapted to be fastened to another element, characterized in that it comprises a plate (1) comprising openings (2) adapted to receive each one a head (3) of a screw (V) or a nut as well as means (4) for clipping the said plate (1) onto the said element (P) so as to apply each screw or nut by its associated flange (5) onto the said element.

2. Device according to claim 1, characterized in that the aforesaid openings (2) exhibit a shape complementary of that of the head (3) of the screw (V) or of the nut for holding them against rotation.

3. Device according to claim 1 or 2, characterized in that at least one portion of the plate (1) is deformable under the effect of a pressure and carries clipping means (4) co-operating with an aperture (9) formed in the aforesaid element (P).

4. Device according to claim 1 or 3, characterized in that the aforesaid clipping means (4) consist of two hooks (7) cut out in the plate and bent orthogonally to the plane of the latter.

5. Device according to claim 4, characterized in that both hooks (7) located in two parallel and very close planes, respectively, have at rest and both together an overall width slightly greater than the dimensions of the aperture (9) in the element (P).

6. Device according to claim 4 or 5, characterized in that both aforesaid hooks (7) form the ends of two mutually confronting tongues (8) cut out in the plate (1).

7. Device according to one of claims 1 to 6, characterized in that the plate (1) exhibits the shape of a polygon the vertices of which comprise the aforesaid openings (2) and the central portion of which elastically deformable under the effect of a pressure comprises the aforesaid clipping means (4).
